# EUROPÄISCHE PATENTSCHRIFT

(11) **EP 3 100 876 B1**
(45) Veröffentlichungstag und Bekanntmachung des Hinweises auf die Patenterteilung: **06.06.2018**
(21) Anmeldenummer: 16153063.9
(22) Anmeldetag: 28.01.2016
(51) Int. Cl.: B60C 1/00, B60C 11/00, B60C 19/08

(54) **NUTZFAHRZEUGREIFEN**
COMMERCIAL VEHICLE TYRE
PNEUMATIQUE DE VÉHICULE UTILITAIRE

(30) Priorität: 19.05.2015 DE 102015209086
(43) Veröffentlichungstag der Anmeldung: 07.12.2016
(73) Patentinhaber: Continental Reifen Deutschland GmbH, 30165 Hannover (DE)
(72) Erfinder: Jungk, Juliane, 30916 Isernhagen (DE); Poland, Bridget, 30159 Hannover (DE)
(74) Vertreter: Finger, Karsten

(56) Entgegenhaltungen:
- EP-A1- 0 847 880
- EP-A1- 2 193 939
- EP-A2- 2 193 934
- JP-A- 2013 006 571

## Beschreibung

Die Erfindung betrifft einen Nutzfahrzeugreifen gemäß dem Oberbegriff des unabhängigen Anspruchs 1. Es ist bekannt und üblich, in Laufstreifen von Nutzfahrzeugreifen Mischungsverbände bestehend aus einer Laufstreifencap und einer radialer innerhalb der Laufstreifencap verlaufenden Laufstreifenbase einzusetzen. Die Laufstreifencap und die Laufstreifenbase sind dabei aus unterschiedlichen Kautschukmischungen gefertigt. Diese Maßnahme gestattet es, bestimmte erwünschte Eigenschaften des Laufstreifens mit Hilfe von unterschiedlichen Mischungssystemen zu verbessern. Beispielsweise kann dadurch die Energiedissipation in der Laufstreifenbase reduziert werden, ohne dass die Abriebeigenschaften oder der Nassgriff des Reifens beeinflusst wird.

Zur Erzielung eines niedrigen Rollwiderstandes und eines guten Nassgriffes ist es ferner üblich, Silica alleine oder in Kombination mit Ruß als Füllstoff(e) in den Kautschukmischungen der Laufstreifenbase und/oder der Laufstreifencap einzusetzen. Gummibauteile aus Silica enthaltenden Kautschukmischungen weisen im Vergleich zu ausschließlich mit Ruß gefüllten Kautschukmischungen eine deutlich geringere elektrische Leitfähigkeit auf. Um die im Betrieb des Reifens auftretende elektrostatische Aufladung ableiten zu können und um unangenehme Entladungsvorgänge zu verhindern, ist es ferner üblich, den Laufstreifen mit einem sogenannten Carbon Center Beam zu versehen. Dieser ist meist ein über den Laufstreifenumfang verlaufender, im Laufstreifen eingebauter Gummistreifen aus einer elektrisch leitfähigen Kautschukmischung, welcher beispielsweise aus der rußgefüllten Kautschukmischung der Laufstreifenbase gefertigt ist. Die elektrische leitfähige Laufstreifenbase enthält eine entsprechend große Rußmenge, um die Leitfähigkeit sicherzustellen, sodass die Laufstreifenbase eine relativ geringe Wärmeleitfähigkeit besitzt, wodurch der Rollwiderstand des Reifens erhöht ist.
Aus der DE 10 2011 001 877 A1 ist ein PKW-Reifen bekannt, welcher einen in radialer Richtung zweischichtig aufgebauten Laufstreifen aufweist, welcher aus einer die Profilierung enthaltenden Laufstreifencap und einer radial innerhalb der Laufstreifencap verlaufenden Laufstreifenbase besteht. Die Laufstreifenbase weist zumindest zwei Teile auf, einen ersten Teil aus einer rollwiderstandsoptimierten Kautschukmischung und einen zweiten Teil aus einer elektrisch leitfähigen Kautschukmischung, wobei der zweite Teil in einem der Schulterbereiche positioniert ist. Die Laufstreifenbase weist ferner einen elektrisch leitfähigen Kautschukkeil auf, welcher die Laufstreifencap in radialer Richtung vollständig durchsetzt. Dieser bekannte Reifen soll einen geringen Rollwiderstand aufweisen.

Die EP 2 193 939 A1 offenbart einen Nutzfahrzeugreifen gemäß dem Oberbegriff des unabhängigen Anspruchs 1. Im Besonderen offenbart die EP 2 193 939 A1 einen PKW-Reifen mit einem in radialer Richtung zweischichtig aufgebauten Laufstreifen aus einer Laufstreifencap und einer Laufstreifenbase. Die Laufstreifenbase weist einen elektrisch leitfähigen schulterseitigen Baseteil auf, welcher an seinem laufstreifeninnenseitigen Ende mit einem die Laufstreifencap in radialer Richtung durchsetzenden elektrisch leitfähigen Gummistreifen in Verbindung steht und welcher mit seinem laufstreifenaußenseitigen Ende einen radial innerhalb der Gürtellagen im Bereich der Gürtelkanten positionierten elektrisch leitfähigen Schulterpolster kontaktiert. Die EP 2 193 934 A2, die EP 0 847 880 A1 und die
JP 2013 006 571 A offenbaren weitere Fahrzeugluftreifen mit Laufstreifen, welche eine Cap/Base Konstruktion mit einer einteiligen elektrisch leitfähigen Laufstreifenbase aufweisen.
Bei Nutzfahrzeugreifen sind die Schulterbereiche hinsichtlich des Wärmeaufbaus besonders kritisch, ein hoher Wärmeaufbau wirkt sich auf die Lebensdauer des Reifens nachteilig aus. Der Erfindung liegt daher die Aufgabe zugrunde, bei einem Nutzfahrzeugreifen der eingangs genannten Art im Laufstreifen die an sich bekannte Silica-Technologie besonders vorteilhaft einzusetzen, um den Rollwiderstand und den Wärmeaufbau zu reduzieren und die Nassgriffeigenschaften zu verbessern.
Die gestellte Aufgabe wird erfindungsgemäß dadurch gelöst, dass der Baseteil aus dem elektrisch leitfähigen Gummimaterial den mittleren Bereich der Laufstreifenbase einnimmt, wobei seitlich dieses Baseteiles jeweils ein weiterer schulterseitig verlaufender Baseteil aus einem Silica enthaltenden elektrisch nicht leitfähigen, einen elektrischen Widerstand größer 10⁸ Ohm aufweisenden, Gummimaterial anschließt, wobei jeder schulterseitige Baseteil laufstreifeninnenseitig höchstens bis zu einer sich in radialer Richtung erstreckenden Ebene reicht, welche durch jene Stellen der an der Laufstreifenoberfläche befindlichen, laufstreifeninnenseitigen Randkante der schulterseitigen Profilrippe verläuft, welche sich am weitesten laufstreifenaußenseitig befinden.
Durch Positionieren des elektrisch leitfähigen Baseteiles im mittleren Bereich der Laufstreifenbase, können die schulterseitigen Baseteile hinsichtlich Rollwiderstand optimiert werden. Dies erfolgt durch das Erstellen der schulterseitigen Baseteile aus einer Silica enthaltenden Kautschukmischung, wodurch die Wärmeleitfähigkeit in den Schulterbereichen verbessert wird. Durch die schulterseitigen Baseteile wird jedoch nicht nur der Rollwiderstand verringert sondern auch der Nassgriff verbessert.
Bei einer bevorzugten Ausführungsform der Erfindung enthält die dem Gummimaterial der schulterseitigen Baseteile zugrunde liegende Kautschukmischung als Füllstoff ausschließlich Silica. Bei einer weiteren, alternativen Ausführungsform der Erfindung enthält die dem Gummimaterial der schulterseitigen Baseteile zugrunde liegende Kautschukmischung als Füllstoffe Silica und Ruß, in derartigen Anteilen, dass die schulterseitigen Baseteile einen elektrischen Widerstand > 1 x 10⁸ Ohm aufweisen.

Eine Maßnahme zur einfacheren Herstellung des Nutzfahrzeugreifens sieht vor, dass der die elektrisch leitfähige Verbindung zwischen dem Baseteil und der Außenfläche der Laufstreifencap herstellende Gummistreifen aus dem Gummimaterial des elektrisch leitfähigen Baseteiles besteht.

Der Rollwiderstand erfindungsgemäß ausgeführter Nutzfahrzeugreifen lässt sich zusätzlich dadurch senken, dass seine Seitenwände aus einem elektrisch nicht leitfähigen, einen elektrischen Widerstand größer 10⁸ Ohm aufweisenden, Gummimaterial bestehen.

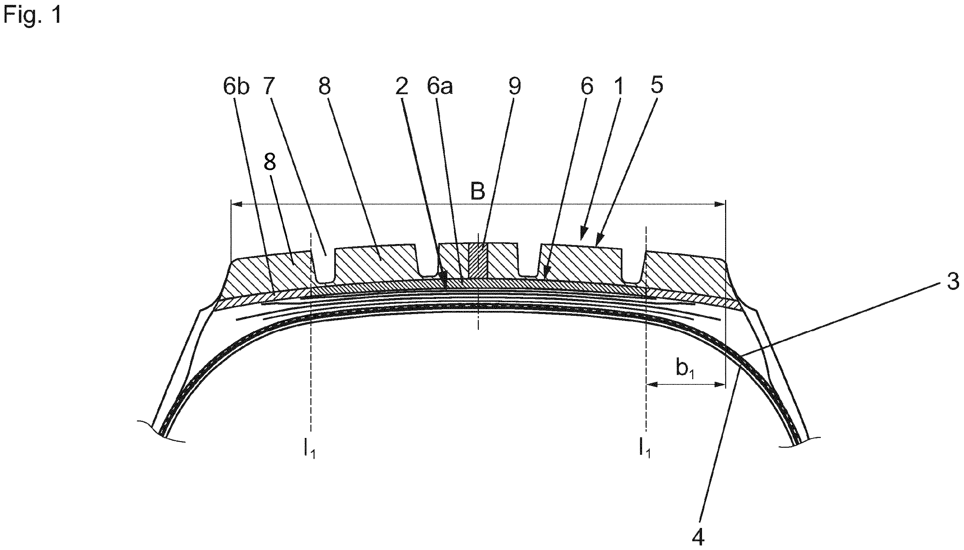

Weitere Merkmale, Vorteile und Einzelheiten der Erfindung werden nun anhand der einzigen Figur, Fig. 1, welche einen schematischen Querschnitt durch den Laufstreifenbereich eines Nutzfahrzeugreifens mit einer Ausführungsform gemäß der Erfindung darstellt, näher erläutert.

In Fig. 1 sind von den üblichen Bauteilen eines Nutzfahrzeugreifens in Radialbauart ein Laufstreifen 1, radial innerhalb des Laufstreifens 1 ein zumindest dreilagiger, vorzugsweise vierlagiger, Gürtelverband 2, dessen Gürtellagen eine elektrisch leitfähige Gürtelgummierung aufweisen, eine mit Festigkeitsträgern verstärkte Radialkarkasse 3 und eine luftdichte Innenschicht 4 dargestellt. Von den nicht bezeichneten Seitenwänden, welche aus einem elektrisch leitfähigen oder aus einem elektrisch nicht leitfähigen Gummimaterial bestehen können, sind lediglich die axial äußeren Endabschnitte gezeigt. Die Wulstbereiche mit Wulstkernen, Kernprofilen und den weiteren üblicherweise in den Wulstbereichen vorgesehenen Verstärkungslagen sind nicht dargestellt.

Der Laufstreifen 1 ist in radialer Richtung zweischichtig aufgebaut und setzt sich aus einer die Profilierung enthaltenden Laufstreifencap 5 und einer radialer innerhalb der Laufstreifencap 5 verlaufenden Laufstreifenbase 6 zusammen. Die Laufstreifenbase 6 erstreckt sich in axialer Richtung über die Breite der Laufstreifencap 5.

Beim gezeigten Ausführungsbeispiel weist der Laufstreifen 1 vier innerhalb der Laufstreifencap 5 verlaufende Umfangsrillen 7 auf, welche die für Nutzfahrzeugreifen übliche maximale Profiltiefe, die insbesondere 8,0 mm bis 12,0 mm beträgt, aufweisen. Die Umfangsrillen 7 gliedern den Laufstreifen 1 in in Umfangsrichtung umlaufende Profilrippen 8, die blockartig strukturiert sein können oder aus Profilblöcken bestehen können. Die axial am weitesten außen liegenden Umfangsrillen sind nachfolgend als schulterseitige Umfangsrillen 7 bezeichnet, die axial außerhalb der schulterseitigen Umfangsrillen 7 verlaufenden Profilrippen nachfolgend als schulterseitige Profilrippen 8. Die schulterseitigen Profilrippen 8 weisen innerhalb der Bodenaufstandsfläche jeweils eine Breite b₁ von 10% bis 25% der Breite B des Laufstreifens 1 im bodenberührenden Teil auf. Die Breite b₁ endet laufstreifeninnenseitig an einer sich in radialer Richtung erstreckenden Ebene, welche durch jene Stellen der an der Laufstreifenoberfläche befindlichen, laufstreifeninnenseitigen Randkante der schulterseitigen Profilrippe 8 verläuft, welche sich am weitesten laufstreifenaußenseitig befinden. Bei gerade in Umfangsrichtung umlaufenden schulterseitigen Umfangsrillen 7 verläuft diese Ebene entlang der laufstreifeninnenseitigen Randkante. Diese Ebenen sind in der in Fig. 1 gezeigten Schnittdarstellung als Linien l₁ eingezeichnet

Die Laufstreifenbase 6 setzt sich aus einem zentralen Baseteil 6a und je einem an diesen in axialer Richtung anschließenden schulterseitigen Baseteil 6b zusammen. Jeder Baseteil 6a, 6b weist über den Reifenumfang eine zumindest im Wesentlichen konstante axiale Breite auf. Die schulterseitigen Baseteile 6b verlaufen radial innerhalb der jeweiligen schulterseitigen Profilrippe 8 und reichen laufstreifeninnenseitig maximal bis zu den durch die Linien l₁ gekennzeichneten Ebenen.

Die Laufstreifencap 5 wird aus einer elektrisch nicht leitfähigen Kautschukmischung hergestellt und besteht dementsprechend aus einem elektrisch nicht leitfähigen Gummimaterial. Der zentrale Baseteil 6a wird aus einer Kautschukmischung, welche als Füllstoff ausschließlich Ruß enthält gefertigt, sodass das Gummimaterial des zentralen Baseteiles 6a eine hohe elektrische Leitfähigkeit aufweist. Die den schulterseitigen Baseteilen 6b zugrunde liegende Kautschukmischung enthält als Füllstoff entweder ausschließlich Silica (fein verteilte Kieselsäure) oder Silica in Kombination mit einem geringen Anteil an Ruß. Die schulterseitigen Baseteile 6b sind daher elektrisch nicht leitfähig, wobei im Rahmen der gegenständlichen Erfindung unter einem elektrisch nicht leitfähigen Gummimaterial ein solches zu verstehen ist, welches einen elektrischen Widerstand > 1 x 10⁸ Ohm aufweist.

Die Laufstreifencap 5 ist durch einen sich in radialer Richtung erstreckenden und in Umfangsrichtung umlaufenden schmalen Gummistreifen 9, einem sogenannten Carbon Center Beam, in axialer Richtung zweigeteilt. Der Gummistreifen 9 verläuft vom zentralen Baseteil 6a bis zur Laufstreifenoberfläche und ist aus einer elektrisch leitfähigen Kautschukmischung, vorzugsweise aus der Kautschukmischung des zentralen Baseteiles 6a, gefertigt. Der Carbon Center Beam bildet daher eine elektrisch leitfähige Passage zwischen der Laufstreifenoberfläche und dem zentralen Baseteil 6a.

### Bezugsziffernliste

- 1: Laufstreifen
- 2: Gürtel
- 3: Radialkarkasse
- 4: Innenschicht
- 5: Laufstreifencap
- 6: Lauftsreifenbase
- 6a: zentraler Baseteil
- 6b: schulterseitiger Baseteil
- 7: Umfangsrille
- 8: Profilrippe
- 9: Gummistreifen

## Patentansprüche

1. Nutzfahrzeugreifen in Radialbauart mit einem Laufstreifen (1) mit zwei in Umfangsrichtung verlaufenden schulterseitigen Umfangsrillen (7), welche jeweils eine schulterseitig verlaufende Profilrippe (8) laufstreifeninnenseitig begrenzen, wobei der Laufstreifen (1) in radialer Richtung zweischichtig aufgebaut ist und sich aus einer die Profilierung enthaltenden Laufstreifencap (5) und einer radial innerhalb der Laufstreifencap (5) verlaufenden Laufstreifenbase (6) zusammensetzt, wobei die Laufstreifencap (5) aus einem elektrisch nicht leitfähigen, einen elektrischen Widerstand größer 10⁸ Ohm aufweisenden, Gummimaterial besteht und die Laufstreifenbase (6) einen Baseteil (6a) aus einem elektrisch leitfähigen Gummimaterial aufweist, wobei ein in Umfangsrichtung umlaufender Gummistreifen (9) aus einem elektrisch leitfähigen Gummimaterial die Laufstreifencap (5) in radialer Richtung durchsetzt und eine elektrisch leitfähige Verbindung zwischen dem Baseteil (6a) und der Außenfläche der Laufstreifencap (5) herstellt, wobei der Baseteil (6a) aus dem elektrisch leitfähigen Gummimaterial den mittleren Bereich der Laufstreifenbase (6) einnimmt, **dadurch gekennzeichnet, dass** seitlich dieses Baseteiles (6a) jeweils ein weiterer schulterseitig verlaufender Baseteil (6b) aus einem Silica enthaltenden elektrisch nicht leitfähigen, einen elektrischen Widerstand größer 10⁸ Ohm aufweisenden, Gummimaterial anschließt, wobei jeder schulterseitige Baseteil (6b) laufstreifeninnenseitig höchstens bis zu einer sich in radialer Richtung erstreckenden Ebene (l₁) reicht, welche durch jene Stellen der an der Laufstreifenoberfläche befindlichen, laufstreifeninnenseitigen Randkante der schulterseitigen Profilrippe (8) verläuft, welche sich am weitesten laufstreifenaußenseitig befinden.

2. Nutzfahrzeugreifen nach Anspruch 1, **dadurch gekennzeichnet, dass** die dem Gummimaterial der schulterseitigen Baseteile (6b) zugrunde liegende Kautschukmischung als Füllstoff ausschließlich Silica enthält.

3. Nutzfahrzeugreifen nach Anspruch 1, **dadurch gekennzeichnet, dass** die dem Gummimaterial der schulterseitigen Baseteile (6b) zugrunde liegende Kautschukmischung als Füllstoffe Silica und Ruß enthält, in derartigen Anteilen, dass die schulterseitigen Baseteile (6b) einen elektrischen Widerstand > 1 x 10⁸ Ohm aufweisen.

4. Nutzfahrzeugreifen nach einem der Ansprüche 1 bis 3, **dadurch gekennzeichnet, dass** der die elektrisch leitfähige Verbindung zwischen dem Baseteil (6a) und der Außenfläche der Laufstreifencap (5) herstellende Gummistreifen (9) aus dem Gummimaterial des elektrisch leitfähigen Baseteiles (6a) besteht.

5. Nutzfahrzeugreifen nach einem der Ansprüche 1 bis 4, **dadurch gekennzeichnet, dass** er Seitenwände aus einem elektrisch nicht leitfähigen, einen elektrischen Widerstand größer 10⁸ Ohm aufweisenden, Gummimaterial aufweist.

## Claims

1. Utility vehicle tyre of radial type of construction, having a tread (1) with two shoulder-side circumferential channels (7) which run in a circumferential direction and which in each case delimit a profile rib (3), running at the shoulder side, towards the tread inner side, wherein the tread (1) is of two-layer construction in a radial direction and is made up of a tread cap (5), which comprises the profiling, and of a tread base (6) running radially within the tread cap (5), wherein the tread cap (5) is composed of an electrically non-conductive rubber material which has an electrical resistance of greater than 10⁸ ohm, and the tread base (6) has a base part (6a) composed of an electrically conductive rubber material, wherein a rubber strip (9) running in encircling fashion in a circumferential direction and composed of an electrically conductive rubber material extends in a radial direction through the tread cap (5) and produces an electrically conductive connection between the base part (6a) and the outer surface of the tread cap (5), wherein the base part (6a) composed of the electrically conductive rubber material occupies the central region of the tread base (6), **characterized in that** said base part (6a) is adjoined laterally by in each case one further base part (6b) which runs at the shoulder side and which is composed of a silica-containing, electrically non-conductive rubber material with an electrical resistance of greater than 10⁸ ohm, wherein each shoulder-side base part (6b) extends towards the tread inner side at most as far as a plane (l₁) which extends in a radial direction and which runs through those points of the marginal edge, situated on the tread surface and facing towards the tread inner side, of the shoulder-side profile rib (8) which are situated furthest towards the tread outer side.

2. Utility vehicle tyre according to Claim 1, **characterized in that** the rubber mixture that forms a basis for the rubber material of the shoulder-side base parts (6b) comprises exclusively silica as filler material.

3. Utility vehicle tyre according to Claim 1, **characterized in that** the rubber mixture that forms a basis for the rubber material of the shoulder-side base parts (6b) comprises silica and soot as filler materials, in fractions such that the shoulder-side base parts (6b) have an electrical resistance of > 1 x 10⁸ ohm.

4. Utility vehicle tyre according to one of Claims 1 to 3, **characterized in that** the rubber strip (9) that produces the electrically conductive connection between the base part (6a) and the outer surface of the tread cap (5) is composed of the rubber material of the electrically conductive base part (6a).

5. Utility vehicle tyre according to one of Claims 1 to 4, **characterized in that** said utility vehicle tyre has sidewalls composed of an electrically non-conductive rubber material which has an electrical resistance of greater than 10⁸ ohm.

## Revendications

1. Bandage pour roue de véhicule utilitaire, à structure radiale, présentant
une bande de roulement (1) dotée de deux rainures périphériques (7) s'étendant à côté des épaulements dans la direction périphérique et délimitant chacune du côté intérieur de la bande de roulement une nervure profilée (8) s'étendant à côté de l'épaulement,
la bande de roulement (1) présentant dans la direction radiale une structure en deux couches et étant constituée d'un chapeau (5) de bande de roulement contenant le profil et d'une base (6) de bande de roulement qui s'étend radialement à l'intérieur du chapeau (5) de bande de roulement,
le chapeau (5) de bande de roulement étant constitué d'un matériau de caoutchouc électriquement non conducteur présentant une résistance électrique supérieure à 10⁸ Ohms et la base (6) de la bande de roulement présentant une partie de base (6a) en un matériau de caoutchouc électriquement conducteur,
une bande périphérique de caoutchouc (9) en un matériau de caoutchouc électriquement conducteur s'étendant dans la direction périphérique et traversant le chapeau (5) de bande de roulement dans la direction radiale, une liaison électriquement conductrice étant établie entre la partie de base (6a) et la surface extérieur du chapeau (5) de bande de roulement,
la partie de base (6a) en matériau de caoutchouc électriquement conducteur occupant la partie centrale de la base (6) de la bande de roulement,
**caractérisé en ce que**
une autre partie de base (6b) s'étendant du côté de l'épaulement, en un matériau de caoutchouc électriquement non conducteur, contenant de la silice et présentant une résistance électrique supérieure à 10⁸ Ohms se raccorde à chaque côté de cette partie de base (6a),
**en ce que** chaque partie de base (6b) située côté d'un épaulement s'étend du côté intérieur de la bande de roulement au plus jusqu'à un plan (l₁) s'étendant dans la direction radiale et passant par tous les emplacements, situés le plus à l'extérieur de la bande de roulement à la surface de la bande de roulement, du bord, situé à l'intérieur de la bande de roulement, de la nervure profilée (8) située côté épaulement.

2. Bandage pour roue de véhicule utilitaire selon la revendication 1, **caractérisé en ce que** le mélange de caoutchouc à la base de la partie de base (6b) située côté épaulement contient comme charge uniquement de la silice.

3. Bandage pour roue de véhicule utilitaire selon la revendication 1, **caractérisé en ce que** le mélange de caoutchouc à la base de la partie de base (6b) située côté épaulement contient comme charge de la silice et du noir de carbone en proportions telles que les parties de base (6b) situées côté épaulement présentent une résistance électrique > 1 x 10⁸ Ohms.

4. Bandage pour roue de véhicule utilitaire selon l'une des revendications 1 à 3, **caractérisé en ce que** le ruban de caoutchouc (9) qui établit la liaison électriquement conductrice entre la partie de base (6a) et la surface extérieure du chapeau (5) de la bande de roulement est constitué du matériau de caoutchouc de la partie de base (6a) électriquement conductrice.

5. Bandage pour roue de véhicule utilitaire selon l'une des revendications 1 à 4, **caractérisé en ce qu'**il présente des parois latérales en un matériau de caoutchouc électriquement non conducteur présentant une résistance électrique supérieure à 10⁸ Ohms.
